# EUROPÄISCHE PATENTSCHRIFT

(11) **EP 0 490 902 B1**
(45) Veröffentlichungstag und Bekanntmachung des Hinweises auf die Patenterteilung: **15.11.1995**
(21) Anmeldenummer: 90911750.9
(22) Anmeldetag: 06.08.1990
(51) Int. Cl.: F04D 29/32

(54) **SCHAUFELRAD, INSBESONDERE FÜR HAARPFLEGEGERÄTE**
IMPELLER, IN PARTICULAR FOR HAIRDRESSING APPLIANCES
ROUE A AUBES, NOTAMMENT POUR DES APPAREILS DE SOINS CAPILLAIRES

(30) Priorität: 07.09.1989 DE 3929738
(43) Veröffentlichungstag der Anmeldung: 24.06.1992
(73) Patentinhaber: Braun Aktiengesellschaft, Frankfurt am Main (DE)
(72) Erfinder: VIETH, Alfred, D-6350 Bad Nauheim (DE)
(86) Internationale Anmeldenummer: DE9000604
(87) Internationale Veröffentlichungsnummer: WO9103648

(56) Entgegenhaltungen:
- DE-A- 2 327 125
- DE-A- 3 428 650
- DE-C- 84 737
- DE-C- 597 146
- FR-A- 1 326 701
- GB-A- 11 464

## Beschreibung

Die Erfindung geht aus von einem Schaufelrad eines Axialgebläses, insbesondere für Geräte zum Trocknen und Formen von Haaren mit einem Nabenkörper, mit mehreren einstückig mit einem Außenmantel des Nabenkörpers verbundenen Schaufeln, die jeweils um einen Drehwinkel versetzt, rotationssymmetrisch am Nabenkörper angeordnet sind, wobei jeweils benachbarte Schaufeln einander im Bereich der Schaufelseiten-Oberkante und der Schaufelseiten-Unterkante über die radiale Erstreckung der Schaufeln vollständig überlappen und ein Öffnungswinkel, der durch eine Projektion der Schaufelseiten-Vorderkante und Schaufelseiten-Hinterkante einer jeden Schaufel auf eine zur Drehachse des Schaufelrades senkrechte Ebene gebildet wird, der Bedingung: Öffnungswinkel kleiner/gleich Drehwinkel genügt.

Ein Schaufelrad mit diesen Merkmalen ist bereits aus der FR-PS 1 326 701 bekannt. Dieses Schaufelrad ist insbesondere dazu vorgesehen, eine verbesserte Druckstabilität in Abhängigkeit vom Durchsatz zu erzielen. Das wesentliche Merkmal des Schaufelrades besteht darin, daß die Ablaufflächen hintere Kanten aufweisen, die sich in entgegengesetzter Richtung einwärts krümmen. Derart profilierte Schaufelräder erzeugen an ihren Hinterkanten entlang der gesamten Druck-Durchsatz-Zone des Gebläses einen stabilen Luftstrom, im Gegensatz zum instabilen Verlauf, der bei gewissen Druckverhältnissen bei gewissen besonderen Durchsatzmengen in den Gebläsen entsteht, bei denen die Schaufelräder ein herkömmliches Profil haben. Bevorzugt sind die Hinterkanten eines jeden Schaufelrades parallel zu den Vorderkanten des jeweilen Schaufelrades angeordnet, wobei befriedigende Resultate auch erhalten werden, wenn die Vorderkanten und die Hinterkanten bis auf 15 Grad abweichen. Die umgekehrte Krümmung der Hinterkanten der Schaufeln erstreckt sich nur auf dem letzten Viertel der Ablaufflächen, dennoch kann es in gewissen Fällen vorteilhaft sein, daß diese umgekehrte Krümmung direkt nach dem Bereich zwischen der Vorder- und Hinterkante der Schaufelräder beginnt. Die Rotoren können einstückig durch Formguß, durch Formung mittels Einspritzung oder mittels Fräsen hergestellt sein und können aus einer Aluminiumlegierung, einem rostfreien Legierungsstahl, aus Kunststoff oder ähnlichem hergestellt werden.

Die Lehre zielt im wesentlichen darauf ab, die Geometrie der Schaufeln so zu gestalten, daß der Richtungsvektor der Vorder- und Hinterkante einer jeden Schaufel weitgehend parallel verläuft. Die dazu gewählte Konstruktionsmethode besteht darin, unterschiedliche Profile auf konzentrische Kreise zu projizieren. Hierdurch entsteht ein Flächentyp zur Beschreibung der Schaufelgeometrie, der sich nicht durch Regelstrahlen beschreiben läßt. Die Modellbildung und Erzeugung eines solchen Flächentyps bedeutet in allen Stufen der Konstruktion und Herstellung eines derartigen Schaufelrades einen erhöhten Aufwand beginnend bei der konstruktiven Ermittlung der Flächenpunkte bis zur Fertigung der Werkzeuge bzw. Spritzgußformen. Darüberhinaus stellt diese, aus der FR-PS 1 326 701 ersichtliche Konstruktionsmethode nicht sicher, daß sich das Schaufelrad bei einer vorgebenen Profilierung der Schaufel entformen läßt, d.h. daß sich ein Schieber des Spritzgrußwerkzeuges, der sich zwischen den beiden Schaufeln befindet, ohne Kollision radial bezüglich der Rotationsachse des Schaufelrades bewegen läßt. Insgesamt gesehen bietet die FR-PS 1 326 701 keine konstruktiven Anregungen zur Herstellung eines Schaufelrades, bei dem sichergestellt ist, daß das Schaufelrad in Spritzgußtechnik herstellbar und auch entformbar ist, wobei die indivuelle Profilierung der Schaufel praktisch ausschließlich durch strömungstechnische bzw. physikalische und nicht durch herstellungstechnische bzw. werkzeugtechnische Randbedingungen bestimmt wird.

Ein weiteres Schaufelrad ist aus der DE-A1 34 28 650 bzw. den entsprechenden, ausländischen Nachanmeldungen US-A 4 678 410 oder JP-A2 61-106103 bekannt. Die in dieser vorveröffentlichten Druckschrift beschriebenen Schaufelräder haben sich in der Praxis aufgrund ihres hohen Wirkungsgrades sehr gut bewährt und sind zu dem aufgrund der besonderen technischen Konstruktion im Spritzgußverfahren großserienmäßig herstellbar. Gerade der letztgenannte Vorteil des bekannten Schaufelrades ist insofern bemerkenswert, als das Entformungsproblem derartiger Schaufelräder trotz der vorhandenen Hinterschneidungen zwischen den Schaufeln und dem Nabenkörper auf einfache Weise unter Verwendung einer vom Prinzip her recht einfach gebauten Spritzgußform gelöst wurde. Allerdings sind die Schaufeln des bekannten Schaufelrades solchermaßen geformt und am Außenmantel des Nabenkörpers angebracht, daß sich benachbarte Schaufel an keinem Punkt überlappen. Zwischen benachbarten Schaufeln ist jeweils ein Spalt vorgesehen.

Aus verschiedenen Gründen ist es trotz Vorhandensein dieses bekannten, bereits weitgehend optimierten Schaufelrades wünschenswert, ein Schaufelrad mit überlappenden Schaufeln zur Verfügung zu stellen. Zum einen ist der Wirkungsgrad eines Schaufelrades dadurch weiter steigerbar, daß benachbarte Schaufeln bei geeigneter Profilierung der Schaufeln einander überlappen. Zum anderen können beim Einsatz von Schaufelrädern mit überlappenden Schaufeln gewisse konstruktive Ergänzungen zum Schutz des Anwenders entfallen, die ansonsten notwendig wären. So sind beim Einsatz eines Schaufelrades mit überlappenden Schaufeln keine zusätzlichen konstruktiven Maßnahmen erforderlich, um den Benutzer beispielsweise davon abzuhalten, mit schlanken, metallischen Gegenständen versehentlich durch das Schaufelrad in das Innere des Axialgebläses bzw. des Gerätes zum Trocknen und Formen von Haaren hineinzugreifen, um damit die Gefahr zu vermeiden, mit stromführenden Teilen innerhalb des Axialgebläses oder des Haartrockengerätes in Berührung zu kommen. Andererseits waren die bisher bekannten Konstruktionsverfahren sowie die daraus abgeleiteten Methoden zur Erstellung von Testteilen und Spritzgußwerkzeugen noch nicht soweit ausgereift, daß auf jeden Fall sichergestellt werden konnte, daß das Schaufelrad mit überlappenden Schaufeln überhaupt entformbar, das heißt spritzgußtechnisch herstellbar war. Die für eine spritzgußtechnische Fertigung der Schaufelräder zwingend erforderlichen Voraussetzungen wie die Entformbarkeit, eine realisierbare Schiebergeometrie und Schieberkinematik des Spritzgußwerkzeuges erschwerten die Fertigung eines solchen Schaufelrades als Kunststoff-Spritzgußteil wesentlich und schränkten darüber hinaus eine strömungstechnisch optimale Profilierung der Schaufeln ein.

Die vorliegende Erfindung ist demgegenüber geeignet, das Problem zu lösen, eine Schaufelradgeometrie eines Axialgebläses anzugeben, bei dem sich jeweils benachbarte Schaufeln überlappen und das Schaufelrad gleichzeitig spritzgußtechnisch herstellbar, insbesondere auch unter Angabe einer geeigneten Schiebergeometrie und Schieberkinematik unabhängig von der speziellen Gestaltung der Profilierung der Schaufel entformbar ist. Dieses Problem wird durch ein Schaufelrad mit den eingangs genannten, bekannten Merkmalen gelöst, bei dem die durch die Schaufelseiten-Außenkante einer jeden Schaufel gebildete Profilkurve eine Krümmung konstanten Vorzeichnes aufweist und alle zur Drehachse senkrechten Querschnitte der Schaufeln Geraden bilden, deren Verlängerungen eine, einer jeden Schaufel zugeordnete Fluchtlinie schneiden.

Wie bei der Beschreibung der Ausführungsbeispiele noch näher erläutert wird, läßt sich ein, unter Einhaltung dieser Randbedingungen konstruiertes Schaufelrad unabhängig von der speziellen Wahl der Schaukelprofilierung auf jeden Fall entformen, das heißt spritzgußtechnisch herstellen. Die Schiebergeometrie und Schieberkinematik des Spritzgußwerkzeuges, insbesondere die Formgebung des Schiebers und die zu wählende Schieberauszugsrichtung lassen sich bei Einhaltung der angegebenen Randbedingungen ohne weiteres theoretisch angeben und praktisch realisieren. Es sind insbesondere in äußerst vorteilhafter Weise Schiebergeometrien angebbar, die eine Trennung der Schieber auf der Schaufeloberbzw. Schaufelunterfläche nicht erforderlich machen. Desweiteren können die Schaufelseiten-Außenkanten nicht nur auf Zylindermantelflächen angeordnet sein, sondern auch auf Mantelflächen von beliebigen rotationssymmetrischen Körpern, so zum Beispiel Kugel- bzw. Kegelmantelfläche, liegen.

Dadurch, daß alle zur Drehachse senkrechten Querschnitte der Schaufel Verlängerungslinien aufweisen, die eine einer jeden Schaufel zugeordnete Fluchtlinie schneiden, wird der konstruktive Aufbau der gesamten Schaufelfläche besonders übersichtlich und die Optimierungsarbeit hinsichtlich des Wirkungsgrades des Schaufelrades erheblich vereinfacht.

Die in den Unteransprüchen angegebenen Ausgestaltungen weisen folgende besondere Vorteile auf: Eine spitzwinklige Öffnung der Schaufelseiten-Oberkante und Schaufelseiten-Unterkante benachbarter Schaufeln in Richtung Schaufelseiten-Innenkante hat fertigungstechnische Vorteile bezüglich der Entformbarkeit. Die Schiebergeometrie des Schiebers des Spritzwerkzeuges und auch die Schieberkinematik, insbesondere also auch die Auszugsrichtung des Schiebers kann innerhalb gewisser Toleranzen liegen, ohne daß die Entformbarkeit des Schaufelrades in Frage gestellt ist. Durch diese spitzwinklige Ausrichtung benachbarter Schaufelkanten wird die Gewährleistung der Entformbarkeit unkritisch, man liegt sozusagen auf der sicheren Seite. Aber auch eine parallele Ausrichtung der Schaufelseiten-Unterkante und Schaufelseiten-Oberkante benachbarter Schaufeln hat Vorteile. Durch diese Maßnahme wird die theoretische, im kartesischen Koordinatensystem vorgegebene Profilkurve bei der Transformation in das zur Beschreibung der Schaufelradgeometrie eher geeignete Zylinderkoordinatensystem nur wenig verzerrt. Die Eigenschaften der theoretisch ermittelten, optimalen Profilkurve (in kartesischen Koordinaten) werden durch eine weitgehend unverzerrte Übertragung auf das reelle Schaufelrad im wesentlichen beibehalten. In der Praxis wird ein Kompromiß zwischen den Vorteilen der spitzwinkligen und parallelen Ausrichtung benachbarter Schaufelkanten durch Wahl eines sehr spitzen Winkels gefunden.

Die spezielle Anordnung der Verlängerungslinie einer Schaufelseiten-Oberkante bzw. Schaufelseiten-Unterkante derart, daß diese Verlängerungslinie durch die Drehachse und eine Fluchtlinie läuft, liegt ein einfaches, einparametriges Konstruktionsprinzip zugrunde. Lediglich durch Variation der Lage der Fluchtlinie relativ zur Drehachse kann die Flügelgeometrie in weiten Grenzen modifiziert werden.

Eine Anordnung der Fluchtlinien einer jeden Schaufel innerhalb eines durch den größten Durchmesser des Nabenkörpers gebildeten Kreises bewirkt eine nur geringfügige Verzerrung der theoretisch ermittelten Profilierung der Schaufelfläche bei Übertragung der Profilkurve vom kartesischen Koordinatensystem in das Zylinderkoordinatensystem.

Weitere Vorteile der Erfindung ergeben sich aus der nachfolgenden Beschreibung der Ausführungsbeispiele und den zugehörigen Figuren.

Es zeigen:
- Fig. 1: eine perspektivische Darstellung eines Schaufelrades mit überlappenden Schaufeln;
- Fig. 2: eine Prinzipdarstellung einer Schaufelradgeometrie mit überlappenden Schaufeln, dargestellt am Beispiel der Konstruktion nach der DE-A1 34 28 650 in perspektivischer Darstellung;
- Fig. 3: die Schiebergeometrie und -kinematik beim Schaufelrad nach Fig. 2;
- Fig. 4: eine Prinzipdarstellung einer Schaufelradgeometrie mit überlappenden Schaufeln gemäß einem ersten Ausführungsbeispiel in perspektivischer Darstellung;
- Fig. 5: eine Prinzipdarstellung der Schaufelradgeometrie nach fig. 4 projiziert auf eine zur Drehachse senkrechte Ebene;
- Fig. 6: die Schiebergeometrie und -kinematik beim Schaufelrad nach Fig. 4, 5;
- Fig. 7: eine Prinzipdarstellung einer Schaufelradgeometrie mit überlappenden Schaufeln gemäß einem zweiten Ausführungsbeispiel projiziert auf eine zur Drehachse senkrechte Ebene und
- Fig. 8: eine Prinzipdarstellung einer Schaufelradgeometrie mit überlappenden Schaufeln gemäß einem dritten Ausführungsbeispiel projiziert auf eine zur Drehachse senkrechten Ebene.

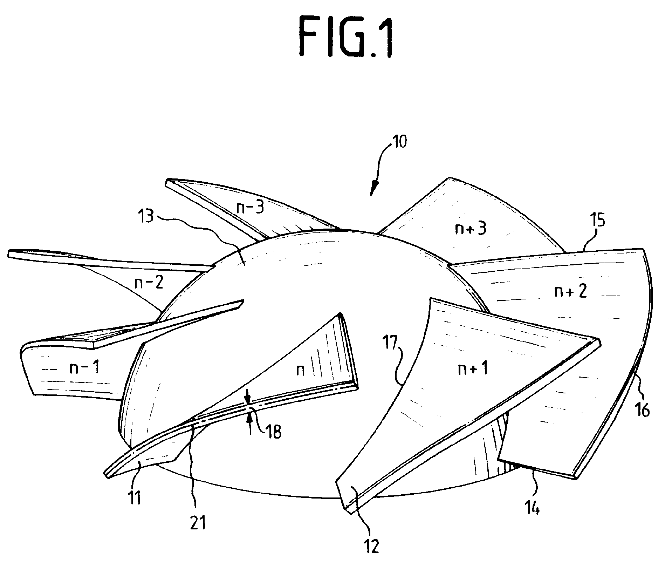

Die Darstellung Fig. 1 eines Schaufelrades mit überlappenden Schaufeln nach der Erfindung dient im wesentlichen zur Bestimmung und Erläuterung der verwendeten Begriffe. Mit der Bezugsziffer 10 ist das Schaufelrad an sich bezeichnet. Am Außenmantel eines Nabenkörpers 13 sind mehrere identisch ausgebildete Schaufeln rotationssymmetrisch angeordnet, wobei die n-te Schaufel die Bezugsziffer 11 und die (n + 1)-te Schaufel die Bezugsziffer 12 trägt. Die Fläche einer jeden Schaufel wird durch eine Schaufelseiten-Unterkante 14, eine Schaufelseiten-Oberkante 15, eine Schaufelseiten-Außenkante 16 und eine Schaufelseiten-Innenkante 17 begrenzt. Jede Schaufel weist eine gewisse Profildicke 18 auf, die über den gesamten Verlauf der Profilkurve 21 konstant oder auch variabel sein kann. Die in der weiteren Beschreibung der folgenden Ausführungsbeispiele und in den Ansprüchen angegebenen Festlegungen der Schaufelradparameter beziehen sich auf Schaufelräder, bei denen die Profildicke 18 der Schaufeln 11, 12 gegen Null geht. Die Schaufelgeometrie wird demnach durch eine Fläche beschrieben, deren dem Nabenkörper 13 abgewandte Seite mittels der Profilkurve 21 dargestellt ist. Nachdem diese die Schaufelgeometrie beschreibende Fläche gefunden ist, wird das Schaufelprofil bzw. die Profildicke sozusagen auf die Fläche "aufmodelliert". Dies erfolgt bevorzugt in der Weise, daß die Schaufelflächen-Oberseite und Schaufelflächen-Unterseite der Schaufel derart relativ zur zweidimensionalen Schaufelprofilfläche angeordnet sind, daß ein zur Drehachse senkrechter Querschnitt der Schaufel zu parallelen Schnittlinien der Schaufelflächen-Oberseite, der Schaufelprofilfläche und der Schaufelflächen-Unterseite führt.

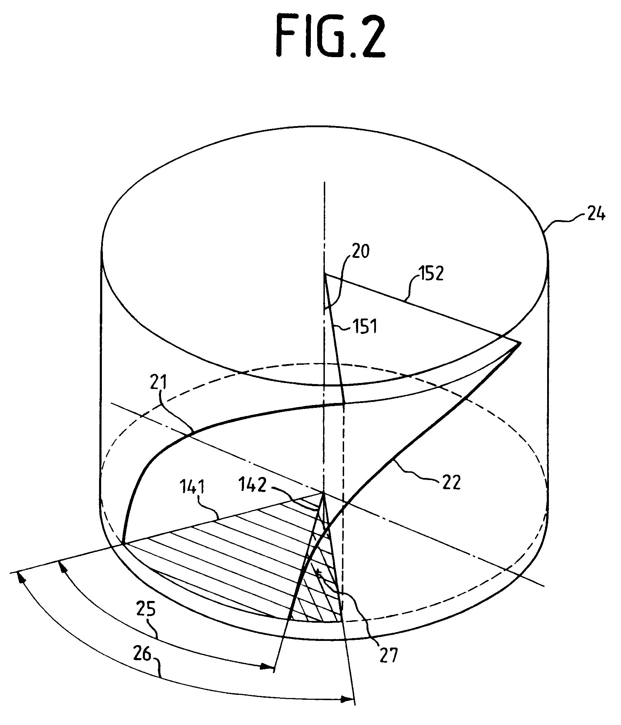

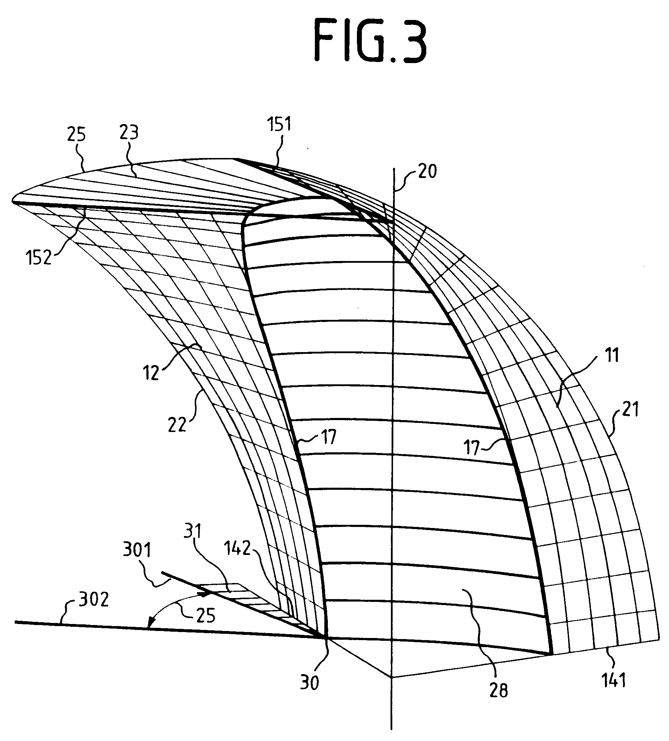

In den Figuren 2 und 3 wird anhand des Standes der Technik (DE-A1 34 28 650) demonstriert, welche Probleme auftreten, wenn diese bekannte Schaufelradgeometrie zur Konstruktion von Schaufelrädern mit überlappenden Schaufeln angewandt wird. In Fig. 2 ist die prinzipielle Schaufelradgeometrie dargestellt, wobei mit der Bezugsziffer 20 die Drehachse des Schaufelrades angedeutet ist. Die Schaufelseiten-Außenkanten sind durch die Profilkurve 21 der n-ten Schaufel und Profilkurve 22 der (n + 1)-ten Schaufel, die auf dem Mantel eines Zylinders 24 liegen, angedeutet. Die einzelnen Schaufeln sind rotationssymmetrisch zur Drehachse 20, versetzt um jeweils einen Drehwinkel 25 auf der Mantelfläche des Zylinders 24 angeordnet. Der Nabenkörper spielt für die folgenden Betrachtungen keine entscheidende Rolle und ist aus Gründen der Vereinfachung zeichnerisch nicht dargestellt. Gemäß dem in der DE-A1 34 28 650 dargelegten Konstruktionsprinzips der Schaufeln bilden alle zur Drehachse 20 des Schaufelrades senkrechten Querschnitte der Schaufelprofilfläche Geraden, deren Verlängerungen die Drehachse 20 schneiden. Insbesondere schneiden daher auch die Schaufelseiten-Oberkanten 151 und 152 und die Schaufelseiten-Unterkanten 141 und 142 der n-ten und (n + 1)-ten Schaufel 11, 12 die Drehachse 20. Der Öffnungswinkel 26 bezeichnet den durch eine Projektion der Schaufelseiten-Oberkante 151 und der Schaufelseiten-Unterkante 141 einer jeden Schaufel 11, 12 auf eine zur Drehachse 20 senkrechte Ebene gebildeten Winkel.

Schließlich ist der Überlappungsbereich zwischen benachbarten Schaufeln zwischen der Schaufelseiten-Unterkante 142 der Schaufel 12 und der Schaufel seiten-Oberkante 151 der Schaufel 11 mit der Bezugsziffer 27 bezeichnet.

Die Profilkurven 21 und 22 der n-ten und (n + 1)-ten Schaufel 11, 12 können willkürliche Formen annehmen unter der Einschränkung, daß die Krümmung ein konstantes Vorzeichen aufweist.

Es sei im weiteren unterstellt, daß der angegebene Verlauf der Profilkurve 21, 22 einen optimalen Wirkungsgrad des Schaufelrades gewährleistet. Offen ist dann nur noch die Beantwortung der Frage, ob ein solchermaßen gestaltetes Schaufel rad auch großserienmäßig, das heißt in Spritzgußtechnik herstellbar, insbesondere entformbar, ist. Zur Beantwortung dieser Fragestellung ist in Fig. 3 ein Teil des Schaufelrades 10 und die Schiebergeometrie 23 eines Schiebers der Spritzgußform dargestellt. In Kreuzschraffur ist der Profilflächenverlauf der n-ten Schaufel 11 und der (n + 1)-ten Schaufel 12 angedeutet. Ein Bereich des Außenmantels 28 des Nabenkörpers 13 zwischen der Schaufel 11 und Schaufel 12 ist horizontal schraffiert. Die Schiebergeometrie 23 des Schiebers des Spritzgußwerkzeuges wird in den für die vorliegende Untersuchung maßgeblichen Bereichen kopfseitig, das heißt im zur Drechachse 20 zugewandten Bereich, durch die Fläche des Außenmantels 28 des Nabenkörpers 13 und in den Seitenbereichen durch den Verlauf des Flächenprofils der Unterseite der Schaufel 11 sowie der Oberseite der Schaufel 12 gebildet. Während des Spritzgußvorganges des Schaufelrades befindet sich der Schieber in der in Fig. 3 eingezeichneten Position. Nach der Beendigung des Spritzgußvorganges und dem Erhärten des Spritzgußteils wird der Schieber aus der dargestellten Position entfernt, insbesondere von dem Nabenkörper 13 weg nach außen gezogen. In der Fig. 3 ist lediglich ein Schieber dargestellt, natürlich sind für ein Spritzgußwerkzeug eine der Anzahl der Schaufeln des Schaufelrades entsprechende Anzahl Schieber vorzusehen.

Entformbar ist das Spritzgußteil dann, wenn die Schieber sich ohne weiteres aus dem Formstück entfernen lassen, also keine Teile des soeben im Spritzgußvorgang hergestellten Schaufelrades dem Schieber während des Auszugvorganges "im Wege" stehen. Betrachtet man zunächst die Schaufelseiten-Oberkanten 151 und 152 der Schaufeln 11, 12, so wird die Auszugsrichtung des Schiebers mit der Schiebergeometrie 23 durch den Drehwinkel 25, den die Schaufelseiten-Oberkanten 151 und 152 miteinander bilden, begrenzt. Eine außerhalb des Winkelbereiches zwischen den Schaufelseiten-Oberkanten 151 und 152 liegende Auszugsrichtung des Schiebers muß zwangsläufig zu einer Zerstörung der Schaufeln 11 oder 12 im Bereich der Schaufelseiten-Oberkanten 151 oder 152 führen, je nachdem in welche Richtung die Auszugsrichtung des Schiebers vom vorgegebenen Winkelbereich abweicht. Ausgehend von einer im Drehwinkelbereich 25 liegenden, bezüglich der Entformbarkeit des Schaufelrades im Bereich der Schaufelseiten-Oberkanten 151, 152 möglichen Auszugsrichtung, ist zu prüfen, ob dieser Drehwinkelbereich der Auszugsrichtungen des Schiebers auch eine Entformbarkeit im Bereich der Schaufelseiten-Unterkanten 141, 142 der Schaufeln 11, 12 zuläßt. Hierzu ist im Punkt 30, dem Schnittpunkt der Schaufel seiten-Unterkante 142 und der Schaufel seiten-Innenkante 17, der Winkelbereich 25 der möglichen Auszugsrichtungen des Schiebers, wie er durch die Schaufelseiten-Oberkanten 151 und 152 festgelegt wurde, aufgetragen. Der Winkelbereich am Punkt 30 wird durch die Gerade 301 als Parallele zu der Schaufelseiten-Oberkante 151 und die Gerade 302 als Parallele zur Schaufelseiten-Oberkante 152 festgelegt. Deutlich ist erkennbar, daß die Schaufel seiten-Unterkante 142 der Schaufel 12 außerhalb des Winkelbereichs 25 zwischen den Geraden 301 und 302 liegt. Als "bestmögliche", aber praktisch immer noch nicht realisierbare Auszugsrichtung für den Schieber kommt die Auszugsrichtung in Richtung der Geraden 301 in Frage. Diese Auszugsrichtung führt jedoch zu einer Kollision des Schiebers im Bereich der Schaufelseiten-Unterkante 142 und zu einer Zerstörung des Spritzgußteils. Würde man dagegen eine Auszugsrichtung des Schiebers in Richtung der Schaufelseiten-Unterkante 142 vorziehen, führte dies zu einer Kollision des Schiebers mit der Schaufel seiten-Oberkante 151 und zu einer Zerstörung der Schaufel in diesem Bereich. Die vorliegende Konstruktion eines Schaufelrades mit überlappenden Schaufeln, bei dem zur Drehachse 20 senkrechte Schnitte der Schaufeln 11, 12 Geraden bilden, deren Verlängerungen die Drehachse 20 schneiden, erweist sich somit als nicht entformbar. Im Winkelbereich zwischen den Geraden 301 und der Schaufelseiten-Unterkante 142 liegt ein Kollisionsbereich 31 vor, in dem der Schieber mit den Schaufeln kollidieren muß.

Zusammenfassend kann festgestellt werden, daß das Konstruktionsprinzip nach der DE-A1 34 28 650 für eine Übertragung auf Schaufelräder mit überlappenden Schaufeln wegen des auftretenden Problems der Nichtentformbarkeit ungeeignet ist.

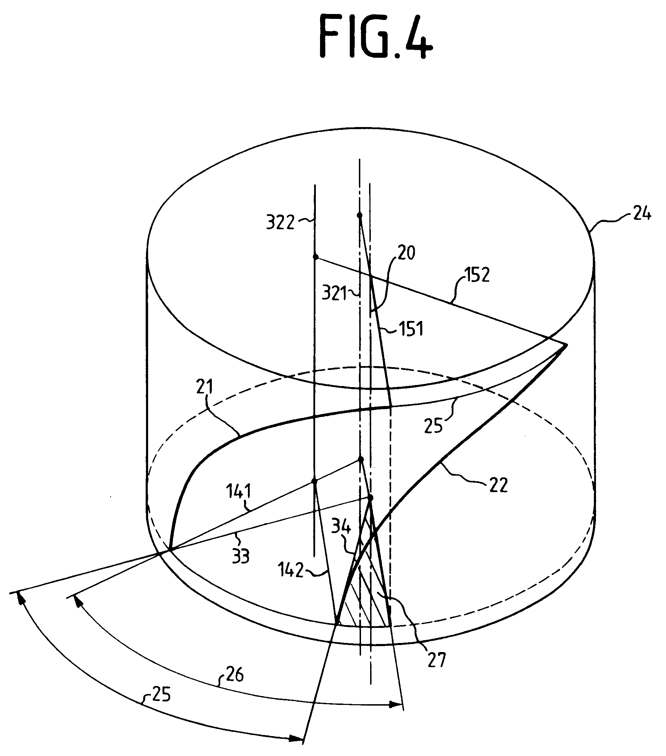

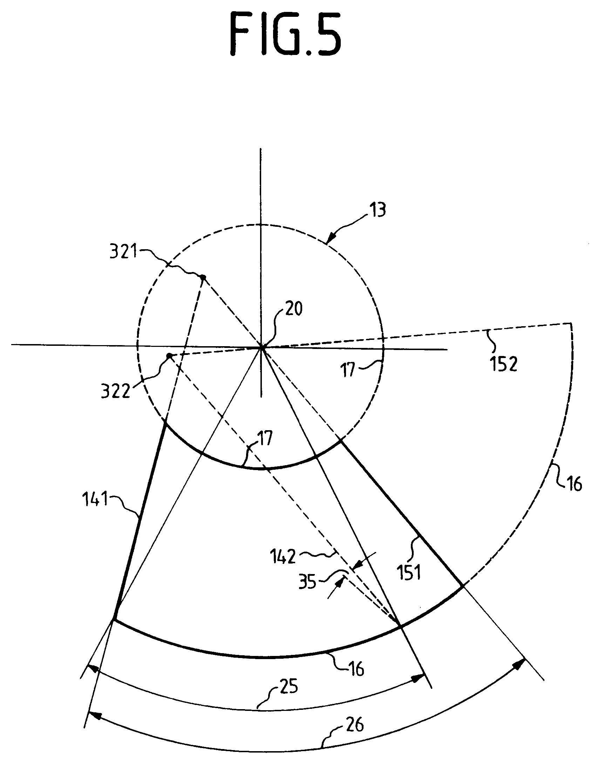

In Fig. 4 ist eine Prinzipdarstellung einer entformbaren Schaufelradgeometrie mit überlappenden Schaufeln gemäß einem ersten Ausführungsbeispiel der Erfindung dargestellt. Die Darstellungsweise und die Zuordnung der Bezugsziffern entspricht weitgehend der Darstellung in Fig. 2, so daß im folgenden lediglich auf die Abweichungen und Besonderheiten eingegangen wird. Die Profilflächen werden begrenzt durch die Profilkurve 21 der n-ten Schaufel und die Profilkurve 22 der (n + 1)-ten Schaufel. Die Schaufelseiten-Oberkanten 151 und 152 schneiden beide die Drehachse und jeweils eine Fluchtlinie 321 und 322, welche parallel zur Drehachse, aber um ein gewisses Maß von dieser versetzt, im Raum angeordnet ist. Hingegen schneiden die Schaufelseiten-Unterkanten 14 jeweils nur die zugehörigen Fluchtlinien, zum Beispiel die Schaufelseiten-Unterkante 142 schneidet die Fluchtlinie 322. Gleiches gilt für alle zur Drehachse 20 senkrechten Querschnitte der Profilflächen der Schaufeln 11, 12, die Geraden bilden, welche die zugehörigen Fluchtlinien 321 und 322, nicht aber die Drehachse 20 schneiden. Schließlich ist die Schaufel seiten-Unterkante 142 der (n + 1)-ten Schaufel 12 parallel oder in einem sich zur Schaufelseiten-Innenkante (17) öffnenden spitzen Winkel 35 (Fig. 5) bezüglich der Schaufelseiten-Oberkante 151 der n-ten Schaufel 11 ausgerichtet. Durch eine geeignete Wahl der Positionierung der Fluchtlinien 321 und 322 relativ zur Drechachse 20 folgt aus dieser Konzeption, daß der Drehwinkel 25 als Winkel zwischen den Schaufelseiten-Oberkanten 151 und 152 größer oder gleich dem Öffnungswinkel 26 ist, der sich als Winkel zwischen der Projektion der Schaufel seiten-Vorderkante 151 und Schaufelseiten-Hinterkante 141 einer jeden Schaufel 11 auf eine zur Drehachse 20 des Schaufelrades 10 senkrechte Ebene ergibt.

Eine Projektion der Profilflächen der Schaufeln 11, 12 der Fig. 4 auf eine zur Drehachse 20 senkrechte Ebene ist in Fig. 5 dargestellt. Die wichtigsten Konstruktionsmerkmale des Schaufelrades der Fig. 4 sollen anhand der Fig. 5 kurz zusammengefaßt werden. Die Schaufelseiten-Oberkanten 151, 152 schneiden die Drehachse 20 sowie die entsprechenden Fluchtlinien 321 und 322. Die Schaufelseiten-Unterkanten 141, 142 sowie die Verlängerungen aller anderen Schnittlinien der Schaufelprofilflächen in einer zur Drehachse 20 senkrechten Ebene schneiden lediglich die Fluchtlinien 321, 322, nicht aber die Drehachse 20. Die Schaufel seiten-Unterkante 142 der (n + 1)-ten Schaufel 12 ist parallel oder in einem spitzen, sich zur Schaufelseiten-Innenkante 17 öffnenden Winkel 35 zur Schaufel seiten-Oberkante 151 der n-ten Schenkel 11 angeordnet. Die Schaufeln 11, 12 überlappen sich im Schaufelseiten-Oberkantenbereich 151 und Schaufelseiten-Unterkantenbereich 142 vollständig über die radiale Erstreckung der Schaufeln. Die die Konstruktion hinsichtlich der Entformbarkeit maßgeblich bestimmenden Winkel sind der Drehwinkel 25, um den die n-te Schaufel 11 um die Drehachse 20 zu drehen ist, um mit der (n + 1)-ten Schaufel zur Deckung zu kommen und der Öffnungswinkel 26. Dieser Öffnungswinkel 26 wird in einer zur Drehachse 20 senkrechten Ebene durch die Projektion der Schaufelseiten-Oberkante 151 und Schaufelseiten-Unterkante 141 einer jeden Schaufel auf diese Ebene gebildet.

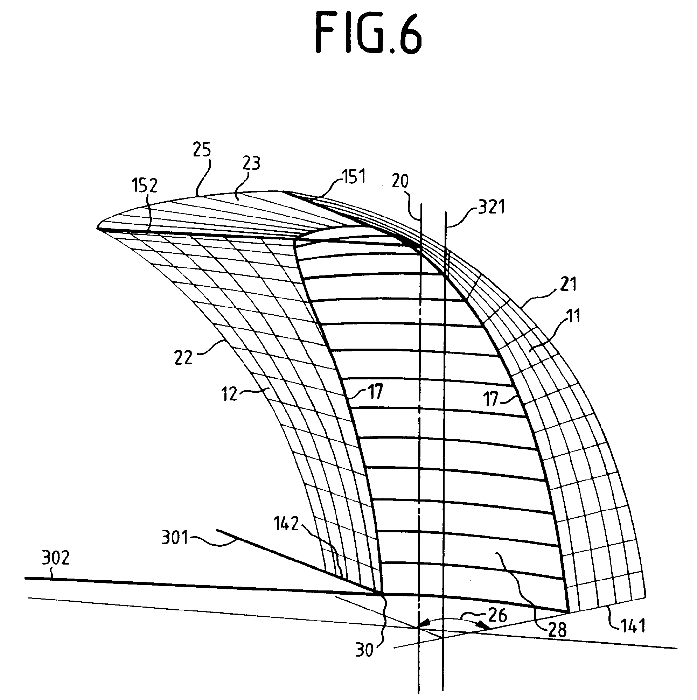

Anhand von Fig. 6, die der Darstellung der Fig. 3 bezüglich der Schiebergeometrie entspricht, wird erläutert, daß im Falle der Einhaltung der Winkelbeziehung - Öffnungswinkel 26 Drehwinkel 25 - die Entformbarkeit des Schaufelrades gemäß den Figuren 4 und 5 gewährleistet ist. In Fig. 6 sind die charakteristischen Konstruktionsmerkmale des ersten Ausführungsbeispiels der Erfindung dargestellt. Die Schaufelseiten-Oberkanten 151 und 152 schneiden die Drehachse und die entsprechenden Fluchtlinien, wobei in Fig. 6 lediglich die zur n-ten Schaufel 11 zugehörige Fluchtlinie 321 dargestellt ist. Hingegen schneiden die Schaufel seiten-Unterkanten 141 sowie 142 nur die entsprechenden, zugehörigen Fluchtlinien. Die Schiebergeometrie 23 des Schiebers wird in den wesentlichen Teilen durch einen Flächenbereich des Außenmantels 28 zwischen den Schaufeln 11, 12 sowie der Schaufelflächen-Unterseite der Schaufel 11 und der Schaufelflächen-Oberseite der Schaufel 12 bestimmt. Die Auszugsrichtung des Schiebers im Schaufelseiten-Oberkantenbereich wird durch die Schaufelseiten-Oberkanten 151 und 152 limitiert. Unter alleiniger Berücksichtigung des oberen Bereichs der Schaufel sind alle innerhalb des Winkelbereichs zwischen den Schaufelseiten-Oberkanten 151 und 152 liegenden Auszugswinkel möglich. Mittels der Geraden 301 und 302 wird der mögliche Winkelauszugsbereich des Schiebers am Punkt 30, der durch den Schnittpunkt der Schaufelseiten-Unterkante 142 und der Schaufelseiten-Innenkante 17 definiert wird, aufgetragen. Dabei ist die Gerade 301 parallel zur Schaufel seiten-Oberkante 151 und die Gerade 302 parallel zur Schaufelseiten-Oberkante 152 ausgerichtet.

Deutlich ist erkennbar, daß im Gegensatz zum Beispiel der Fig. 3 kein Kollisionsbereich 131 auftritt, sondern daß die Schaufelseiten-Unterkante 142 mit der Geraden 301 zur Deckung kommt. Somit ist es in diesem Fall möglich, den Schieber aus dem Schaufelrad in Richtung der Geraden 301 herauszuziehen, ohne mit Teilen des Schaufelrades zu kollidieren. Dieser Sonderfall, daß die Schaufelseiten-Unterkante 142 parallel zur Geraden 301 verläuft, tritt genau dann auf, wenn der Drehwinkel 25 zum Öffnungswinkel 26 identische Werte annimmt, also Gleichheit zwischen beiden Winkeln 25, 26 gegeben ist. Damit ist gezeigt, daß bei Einhaltung der vorerwähnten Konstruktionsbedingungen ein Schaufelrad mit überlappenden Schaufeln und der Möglichkeit der Entformbarkeit realisierbar ist.

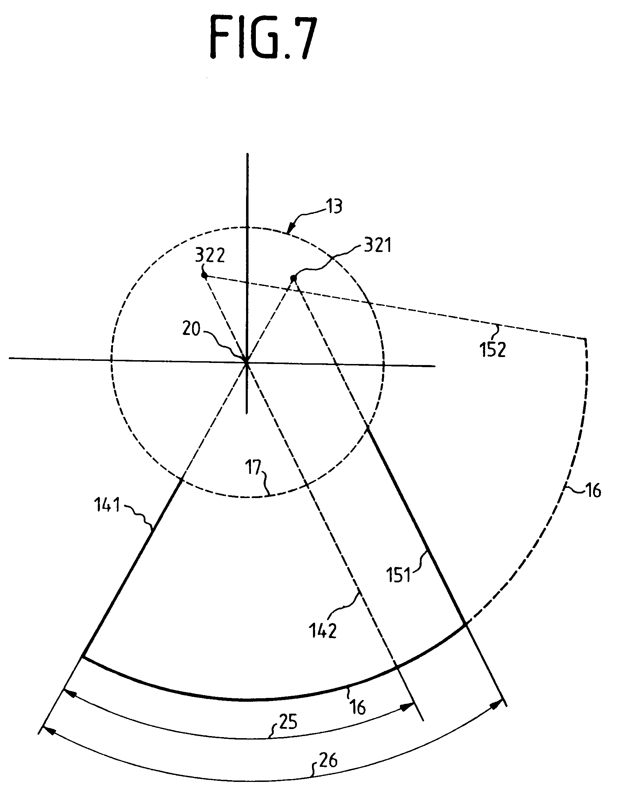

Ein zweites Ausführungsbeispiel der Erfindung ist in Fig. 7 dargestellt. Im Unterschied zur Darstellung der Fig. 5 schneiden die Verlängerungslinien der Schaufelseiten-Unterkanten 141, 142 die Drehachse 20 und die zugehörigen Fluchtlinien 321 und 322. Die Verlängerungen der Schaufelseiten-Oberkanten 151 und 152 und aller anderen Schnittlinien, die durch zur Drehachse 20 senkrechte Schnitte der Schaufeln gebildet werden, schneiden lediglich die Fluchtlinien 321 und 322, nicht aber die Drehachse 20. Ansonsten ist die Konstruktion des Schaufel rades nach Fig. 7 identisch zu der in den Figuren 4 bis 6 dargestellten Geometrie. Analoge Überlegungen zeigen, daß auch dieses Schaufel rad ohne weiteres entformbar ist. Auch hier liegt der Sonderfall gleicher Winkelwerte des Drehwinkels 25 und Öffnungswinkels 26 vor, wie sich anhand der Strahlensätze leicht zeigen läßt.

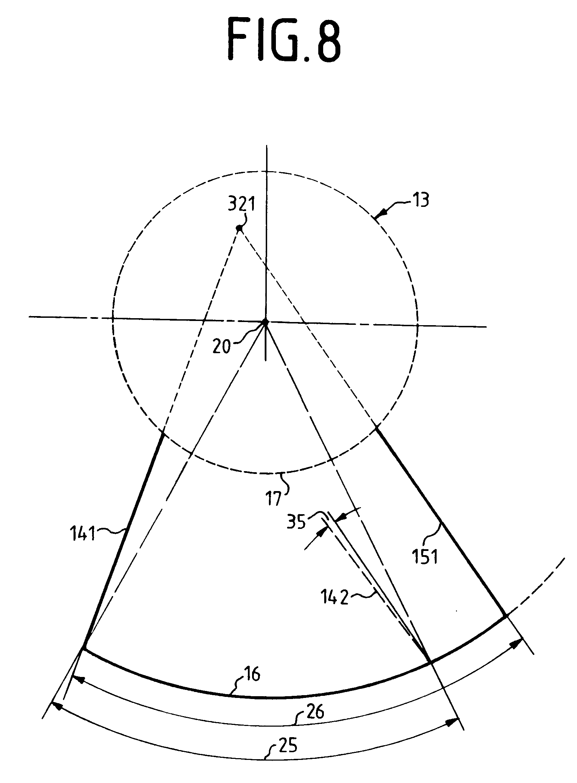

In Fig. 8 ist ein drittes Ausführungsbeispiel eines entformbaren Schaufelrades als Projektion auf eine zur Drehachse 20 senkrechte Ebene dargestellt. Weder die Verlängerung der Schaufelseiten-Oberkante 151 noch die Verlängerung der Schaufelseiten-Unterkante 141 schneiden die Drehachse, beide Verlängerungslinien weisen lediglich einen Schnittpunkt mit der Fluchtlinie 321 auf. Auch die Schaufel seiten-Oberkante 151 und die Schaufelseiten-Unterkante 142 der n-ten Schaufel 11 bzw. des (n + 1)-ten Schaufel 12 weisen zueinander einen spitzen Winkel 35 auf, der sich in Richtung der Schaufelseiten-Innenkante 17 bzw. der Drehachse 20 öffnet. Auch hier ist die Bedingung, daß der Öffnungswinkel 26, gebildet durch die Schaufelseiten-Oberkante 151 und Schaufelseiten-Unterkante 141 kleiner als der Drehwinkel 25 ist, erfüllt. Aufgrund zum ersten Ausführungsbeispiel analoger Überlegungen läßt sich wieder die Entformbarkeit des Schaufelrades mit Schaufelanordnungen nach Fig. 8 herleiten.

Die Erfindung ist nicht auf die beschriebenen Ausführungsbeispiele beschränkt, sondern erstreckt sich auf alle Schaufelradkonzeptionen mit überlappenden Schaufeln, bei denen die Beziehung zwischen dem Öffnungswinkel 26 und dem Drehwinkel 25, nämlich daß der Öffnungswinkel 26 kleiner gleich dem Drehwinkel 25 ist, erfüllt ist.

## Patentansprüche

1. Schaufelrad eines Axialgebläses, insbesondere für Geräte zum Trocknen und Formen von Haaren mit einem Nabenkörper (13), mit mehreren einstückig mit einem Außenmantel (28) des Nabenkörpers (13) verbundenen Schaufeln (11, 12), die jeweils um einen Drehwinkel (25) versetzt, rotationssymmetrisch am Nabenkörper (13) angeordnet sind, wobei jeweils benachbarte Schaufeln (11, 12) einander im Bereich der Schaufelseiten-Oberkante (151, 152) und der Schaufelseiten-Unterkante (141, 142) über die radiale Erstreckung der Schaufeln (11, 12) vollständig überlappen und ein Öffnungswinkel (26), der durch eine Projektion der Schaufelseiten-Vorderkante (151 bzw. 152) und Schaufelseiten-Hinterkante (141 bzw. 142) einer jeden Schaufel (11) bzw. (12) auf eine zur Drehachse (20) des Schaufelrades (10) senkrechte Ebene gebildet wird, der Bedingung: Öffnungswinkel (26) kleiner/gleich Drehwinkel (25) genügt, dadurch gekennzeichnet, daß die durch die Schaufelseiten-Außenkante (16) einer jeden Schaufel (11) gebildete Profilkurve (21, 22) eine Krümmung konstanten Vorzeichnes aufweist und alle zur Drehachse (20) senkrechten Querschnitte der Schaufeln (11, 12) Geraden bilden, deren Verlängerungen eine, einer jeden Schaufel (11, 12) zugeordnete Fluchtlinie (321, 322) schneiden, wobei jede Fluchtlinie parallel zur Drehachse, aber um ein gewisses Maß von dieser versetzt, angeordnet ist.

2. Schaufelrad nach Anspruch 1, dadurch gekennzeichnet, daß die Schaufelseiten-Oberkante (151) der Schaufel (11) und die Schaufelseiten-Unterkante (142) der Schaufel (12) ausgehend von den Schaufelseiten-Außenkanten (16) zu den Schaufelseiten-Innenkanten (17) in einem spitzen Winkel (35) auseinanderlaufen.

3. Schaufelrad nach Anspruch 1, dadurch gekennzeichnet, daß die Schaufelseiten-Oberkante (151) der Schaufel (11) und die Schaufelseiten-Unterkante (142) der Schaufel (12) in parallel zueinander liegenden Ebenen angeordnet sind.

4. Schaufelrad nach Anspruch 3, dadurch gekennzeichnet, daß die Verlängerung der Schaufelseiten-Oberkante (151) der Schaufel (11) die Drehachse (20) sowie eine zur Drehachse (20) parallele Fluchtlinie (321) und die Verlängerung der Schaufelseiten-Unterkante (141) der Schaufel (11) nur die Fluchtlinie (321) schneiden.

5. Schaufelrad nach Anspruch 3, dadurch gekennzeichnet, daß die Verlängerung der Schaufelseiten-Unterkante (141) der Schaufel (11) die Drehachse (20) sowie eine zur Drehachse 820) parallele Fluchtlinie (321) und die Verlängerung der Schaufelseiten-Oberkanten (151) der Schaufel (11) nur die Fluchtlinie (321) schneiden.

6. Schaufelrad nach Anspruch 4 und 5, dadurch gekennzeichnet, daß jeder Schaufel (11, 12) eine separate Fluchtlinie (321, 322) zugeordnet ist.

7. Schaufelrad nach Anspruch 4 ode 5, dadurch gekennzeichnet, daß die Fluchtlinien (321, 322) einer jeden Schaufel (11, 12) innerhalb eines durch den größten Durchmesser des Nebenkörpers (13) gebildeten Kreises angeordnet sind.

## Claims

1. An impeller of an axial-flow type fan, in particular for appliances for drying and dressing hair, with a hub structure (13), a plurality of blades (11, 12) integrally formed with a circumferential outer surface (28) of said hub structure (13) and arranged on said hub structure (13) in a rotationally symmetrical manner, each blade being offset relative to an adjacent blade by an angle of rotation (25), in which adjacent blades (11, 12) completely overlap each other in the area of the blade leading edge (151, 152) and the blade trailing edge (141, 142) over the radial extent of said blades (11, 12), and in which an opening angle (26) formed by a projection of said leading edge (151, 152) and said trailing edge (141, 142) of each blade (11, 12) on a a plane normal to the axis of rotation (20) of said impeller (10) satisfies the condition that said opening angle (26) be smaller than or equal to said angle of rotation (25), characterized in that the profile (21, 22) formed by the outer edge (16) of each blade (11) has a curvature of constant sign, and that all cross-sections of said blades (11, 12) normal to said axis of rotation (20) form straight lines whose extensions intersect a respective vanishing line (321, 322) associated with a respective one of said blades (11, 12), with each of said vanishing lines being arranged parallel to said axis of rotation, yet spaced therefrom by a specified amount.

2. The impeller as claimed in claim 1, characterized in that said leading edge (151) of said blade (11) and said trailing edge (142) of said blade (12) diverge at an acute angle (35) extending from said blade outer edge (16) to the blade inner edge (17).

3. The impeller as claimed in claim 1, characterized in that said leading edge (151) of said blade (11) and said trailing edge (142) of said blade (12) are arranged in planes lying parallel to each other.

4. The impeller as claimed in claim 3, characterized in that the extension of said leading edge (151) of said blade (11) intersects said axis of rotation (20) as well as a vanishing line (321) extending parallel to said axis of rotation (20), and the extension of said trailing edge (141) of said blade (11) intersects only said vanishing line (321).

5. The impeller as claimed in claim 3, characterized in that the extension of said trailing edge (141) of said blade (11) intersects said axis of rotation (20) as well as a vanishing line (321) extending parallel to said axis of rotation (20), and the extension of said leading edge (151) of said blade (11) intersects only said vanishing line (321).

6. The impeller as claimed in claims 4 and 5, characterized in that each blade (11, 12) has associated to it a separate vanishing line (321, 322).

7. The impeller as claimed in claim 4 or claim 5, characterized in that said vanishing lines (321, 322) associated with a respective one of said blades (11, 12) are arranged in the boundaries of a circle formed by the largest diameter of said hub structure (13).

## Revendications

1. Roue à aubes d'une soufflante ou d'un ventilateur axial, en particulier pour appareils de séchage et de mise en forme de cheveux, comprenant un corps formant moyeu (13) et plusieurs aubes (11, 12) reliées d'un seul tenant à la surface latérale extérieure (28) du moyeu (13) et qui sont disposées à symétrie de révolution et chaque fois avec un décalage d'un angle de rotation (25) sur le moyeu (13), des aubes (11, 12) voisines se recouvrant chaque fois complètement, sur toute l'étendue radiale des aubes (11, 12), dans la zone du bord supérieur (151, 152) d'une aube et du bord inférieur (141, 142) de l'aube voisine, et un angle d'ouverture (26), formé par une projection du bord avant (151 ou 152) et le bord arrière (141 ou 142) de chaque aube (11 ou 12) sur un plan perpendiculaire à l'axe de rotation (20) de la roue à aubes (10), satisfaisant à la condition: l'angle d'ouverture (26) est inférieur ou égal à l'angle de rotation (25), caractérisée en ce que la courbe de profil (21, 22) formée par le bord extérieur (16) de chaque aube (11) présente une courbure de signe constant et toutes les sections droites des aubes (11, 12) perpendiculaires à l'axe de rotation (20) forment des droites dont les prolongements coupent une ligne de fuite (321, 322) coordonnée à chaque aube (11, 12), chaque ligne de fuite étant parallèle à l'axe de rotation, mais décalée dans une certaine mesure de celui-ci.

2. Roue à aubes selon la revendication 1, caractérisée en ce que le bord supérieur (151) d'une aube (11) et le bord inférieur (142) de l'aube (12) voisine s'écartent mutuellement sous un angle aigu (35) à partir des bords extérieurs (16) vers les bords intérieurs (17) des aubes.

3. Roue à aubes selon la revendication 1, caractérisée en ce que le bord supérieur (151) d'une aube (11) et le bord inférieur (142) de l'aube (12) voisine sont situés dans des plans parallèles.

4. Roue à aubes selon la revendication 3, caractérisée en ce que le prolongement du bord supérieur (151) d'une aube (11) coupe l'axe de rotation (20) ainsi qu'une ligne de fuite (321) parallèle à l'axe de rotation (20), et le prolongement du bord inférieur (141) de la même aube (11) coupe seulement la ligne de fuite (321).

5. Roue à aubes selon la revendication 3, caractérisée en ce que le prolongement du bord inférieur (141) d'une aube (11) coupe l'axe de rotation (20) ainsi qu'une ligne de fuite (321) parallèle à l'axe de rotation (20), et le prolongement du bord supérieur (151) de la même aube (11) coupe seulement la ligne de fuite (321).

6. Roue à aubes selon les revendications 4 et 5, caractérisée en ce qu'une ligne de fuite séparée (321, 322) est coordonnée à chaque aube (11, 12).

7. Roue à aubes selon la revendication 4 ou 5, caractérisée en ce que les lignes de fuite (321, 322) de chaque aube (11, 12) sont disposées à l'intérieur d'un cercle formé par le plus grand diamètre du moyeu (13).
